# EUROPEAN PATENT APPLICATION

(11) **EP 4 647 911 A1**
(43) Date of publication of application: **12.11.2025**
(21) Application number: 25173099.0
(22) Date of filing: 29.04.2025
(51) Int. Cl.: G06F 9/48

(54) **MIGRATION PRECHECK WORKFLOW FOR HYPER-CONVERGED INFRASTRUCTURE IN HYBRID CLOUD DEPLOYMENT**

(30) Priority: 07.05.2024 US 202418657706
(71) Applicant: VMware LLC, Palo Alto, CA 94304 (US)
(72) Inventor: Yang, Yang, Irvine, 92618 (US); Yang, Yang, Irvine, 92618 (US); Feng, Jin, Irvine, 92618 (US)
(74) Representative: Dilg, Haeusler, Schindelmann Patentanwaltsgesellschaft mbH

(57) **Abstract**

A method of migrating an executing virtual machine, VM, from a source host computer (150-1) to a destination host computer (170-1), includes the steps of: issuing a first instruction to the source host computer (150-1) to instantiate a dummy VM (154-1) having a plurality of network configurations that match a corresponding plurality of network configurations of a target VM (154-2, 154-3); issuing second instructions to the source (150-1) and destination host computers (170-1) to migrate the dummy VM (154-1) from the source host computer (150-1) to the destination host computer (170-1); determining that the dummy VM (154-1) that has been migrated to the destination host computer (170-1) is able to communicate with the target VM (154-2, 154-3); and in response to determining that the migrated dummy VM (154-1) is able to communicate with the target VM (154-2, 154-3), issuing third instructions to the source (150-1) and destination host computers (170-1) to migrate the target VM (154-2, 154-3) from the source host computer (150-1) to the destination host computer (170-1).

## Description

### Background

In a hyper-converged infrastructure (HCI) computing environment, virtual resources are provisioned from a hardware infrastructure to deploy software-defined data centers (SDDCs). The hardware infrastructure includes a plurality of host computers, referred to herein simply as "hosts," each of the hosts including hardware components such as computing, networking, storage, and memory devices. The virtual resources include, for example, virtual machines (VMs) and virtual computing, networking, storage, and memory provisioned by virtualizing the hardware components of the hosts. The provisioning of the virtual resources may be carried out by SDDC management software that is deployed on management appliances such as a VMware vCenter Server^{®} appliance and a VMware NSX^{®} appliance, available from VMware, Inc. The SDDC management software manages the virtual resources through virtualization software (e.g., hypervisors) installed in the hosts.

It has become common to deploy multiple SDDCs across multiple clusters of hosts. Each cluster is a group of hosts that are managed together, e.g., by SDDC management software, to provide cluster-level functions. For example, the functions may include load balancing across the cluster, distributed power management, dynamic VM placement according to affinity and anti-affinity rules, and high availability (HA). The SDDC management software also manages software-defined networks through which the VMs communicate. In an HCI computing environment, the SDDC management software also aggregates local or direct-attached storage devices of the hosts to create a storage pool shared across the hosts of a cluster.

Today, many organizations have SDDCs deployed across different geographical regions and even in a hybrid manner. A hybrid cloud includes applications running in a combination of different types of infrastructures, e.g., on-premise, in a private cloud, in a public cloud, and as a service. SDDCs that are deployed on-premise are provisioned on a particular organization's own information technology (IT) infrastructure. SDDCs that are deployed in a private cloud are provisioned in a private data center controlled by the organization. SDDCs that are deployed in a public cloud are provisioned in a public data center at which SDDCs of other organizations are also provisioned. SDDCs that are deployed as a service are provided to the organization on a subscription basis such that management operations such as configuring, upgrading, and patching are performed for the organization according to a service-level agreement (SLA).

In a hybrid deployment, VMs are sometimes migrated between clusters, potentially between different HCI infrastructures, e.g., from a host in a cluster of a private cloud to a host in a cluster of a public cloud. Such migration may be performed, for example, when hardware resources such as CPU resources at the cluster in the private cloud are overloaded, while the cluster in the public cloud has enough hardware resources to effectively support the execution of the VMs. As used herein, the host and cluster from which a VM is migrated are referred to as a "source host" and "source cluster," and the host and cluster to which the VM is migrated are referred to as a "destination host" and "destination cluster." For example, to perform such a migration, data of the VM stored in memory and storage of the source host, may be copied to the destination host to execute a copy of the VM at the destination host, and upon determining that the VM copy executes successfully at the destination host, the original data may be deleted from the memory and storage of the source host.

Some migrations, referred to as "storage migrations," include moving storage objects such as disk files of a live (currently executing) VM from a data store of the source cluster to a data store of the destination cluster. However, such storage migrations are increasingly complex, with many different factors to consider. For example, network configurations of a VM may be compatible with a hypervisor on the source host but incompatible with a hypervisor on the destination host. As another example, a storage policy used by the VM may be supported by the data store of the source cluster but unsupported by the data store of the destination cluster.

Given the complexities of storage migrations, it has become common to first perform "prechecks" by identifying information (e.g., about the VMs) before starting the migrations. Such prechecks uncover issues to remediate so that once the migrations are initiated, they are carried out without disrupting applications executing on the VMs. However, even after performing such prechecks, migrations still sometimes fail because such prechecks fail to uncover some of the issues, resulting in disruption to the execution of the VMs and applications therein. Indeed, it is challenging to implement effective prechecks given the complexities of migrating VMs, which vary widely, e.g., in network configurations and in storage requirements, between clusters, which similarly vary widely, e.g., in network configurations and capabilities and in storage resources. A method is needed for using prechecks to more reliably perform live storage migrations of VMs, particularly for complex software deployments such as hybrid deployments of HCI computing environments.

### Summary

One or more embodiments provide a method of migrating an executing VM from a source host computer to a destination host computer. The method includes the steps of: issuing a first instruction to the source host computer to instantiate a dummy VM having a plurality of network configurations that match a corresponding plurality of network configurations of a target VM, which is running on the source host computer and has been targeted for migration; issuing second instructions to the source and destination host computers to migrate the dummy VM from the source host computer to the destination host computer; determining that the dummy VM that has been migrated to the destination host computer is able to communicate with the target VM; and in response to determining that the migrated dummy VM is able to communicate with the target VM, issuing third instructions to the source and destination host computers to migrate the target VM from the source host computer to the destination host computer.

Further embodiments include a non-transitory computer-readable storage medium comprising instructions that cause a computer system to carry out the above method, as well as a computer configured to carry out the above method.

### Brief Description of the Drawings

Figure 1 is a block diagram of a computer system in which embodiments may be implemented.
Figure 2 is a block diagram of an example of a source host and a destination host of the computer system for a storage migration.
Figure 3 is a flow diagram of a method performed by a cloud platform of the computer system to perform prechecks for a storage migration of one or more VMs and to migrate the VM(s) from a source host of a source cluster to a destination host of a destination cluster, according to some embodiments.
Figure 4 is a flow diagram of a method performed by the cloud platform to plan and orchestrate a dummy migration portion of the prechecks, according to some embodiments.
Figure 5 is a flow diagram of a method performed by hosts of the computer system to execute the dummy migration, according to some embodiments.
Figure 6 is a flow diagram of a method performed by the cloud platform and by appliances of the computer system to perform precheck tasks by acquiring and analyzing information relevant to a migration, according to some embodiments.

### Detailed Description

Techniques are described for using prechecks to more reliably perform live storage migrations of VMs, such live storage migrations also referred to herein simply as "migrations." According to some embodiments, a cloud platform delivers various services to SDDCs through agents that are running in appliances. The services of the cloud platform are referred to herein as "cloud services," and the appliances in which the agents are running are referred to as "agent platform (AP) appliances." The cloud platform may be provisioned in a public cloud, and the AP appliances may be, for example, deployed in a customer's HCI computing environments along with management appliances.

Each of the cloud services may have corresponding agents on the AP appliances that the cloud service communicates with, and the cloud platform and AP appliances may be, for example, connected over a public network such as the Internet. Furthermore, each of the AP appliances may be connected to respective management appliances over a private network such as a local area network (LAN). Accordingly, the cloud services and management appliances are able to communicate through the agents of the AP appliances. Through such communication, the cloud platform may orchestrate prechecks for migrating live VMs and orchestrate the migrations, as follows.

Firstly, before migrating one or more VMs, referred to herein as "target VMs," the cloud platform orchestrates the migration of a "dummy VM." The dummy VM is instantiated on the source host of the migration, wherein the dummy VM executes alongside the target VM(s). The dummy VM is then migrated to the destination host along with its virtual disk. As used herein, "instantiating" is creating an instance of, e.g., a running process such as a running VM. Additionally, as used herein, a dummy VM is a VM that is configured to mirror various configurations of a target VM(s) such as network configurations. A virtual disk is a file or set of files that reproduce the function of a storage device such as by emulating a magnetic drive or SSD, e.g., for a VM.

Next, before initiating the migration of the target VM(s), the cloud platform analyzes the success and performance of the migration of the dummy VM. Such analysis may include confirming that the dummy VM is able to communicate over a logical Layer 2 (L2) network of the target VM(s) before and after the migration. A logical network is a network implemented in software, a logical L2 network being a logical network operating at the second layer of the Open Systems Interconnection (OSI) model, also referred to as the data link layer. Because the dummy VM has copied configurations from the target VM(s), such analysis verifies that when the target VM(s) are migrated, they will execute continuously without interruptions, e.g., in network connectivity. Such analysis also examines various performance metrics such as, for example, network bandwidth consumed by the migration of the dummy VM and the migration's usage of central processing units (CPUs) of the source host and of CPUs of the destination host. Using such metrics, the cloud platform adjusts the migration of the target VM(s) such as by limiting the migration's allowable bandwidth consumption between the source and destination hosts or CPU consumption at the source or destination hosts.

Secondly, before migrating the target VM(s), precheck tasks are completed to verify information relevant to the migration, e.g., about computing resources of the source and destination data stores. Some of the precheck tasks, referred to herein as "default precheck tasks," are specified to be used for any migration. Other precheck tasks, referred to herein as "customized precheck tasks," are created specifically for a particular migration based policies of the source or destination clusters such as compression or deduplication policies and security policies, as discussed below. For example, customized precheck tasks may be specified by an administrator of the source and destination clusters by using templates with a predetermined syntax for specifying what information to acquire, the names of the source and destination clusters, the expected values of the information (i.e., expected outputs of the precheck tasks), etc. Supporting customized precheck tasks enables the analysis and verification of different configurations, requirements, and resources of the VMs and clusters, to ensure that migrations will be successful for a wide variety of different VMs, hosts, and clusters. These and further aspects of the invention are discussed below with respect to the drawings.

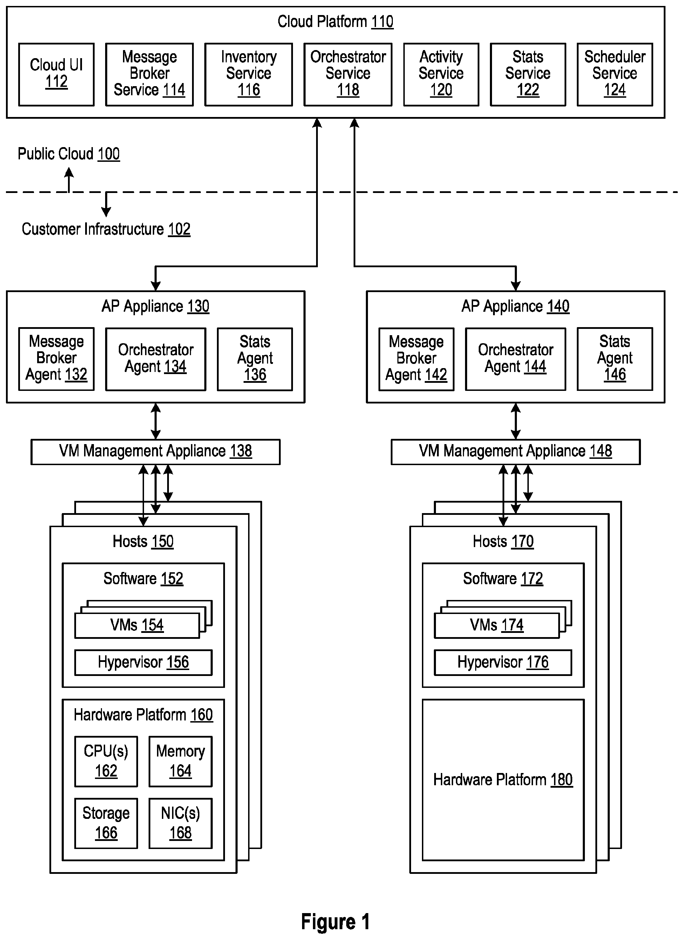

Figure 1 is a block diagram of a computer system in which embodiments may be implemented. The computer system includes a multi-tenant cloud platform 110, which is implemented in a public cloud 100 in the example computer system of Figure 1. The computer system further includes infrastructure 102 of an organization (customer). Customer infrastructure 102 includes AP appliances 130 and 140, VM management appliances 138 and 148, a cluster of hosts 150, and a cluster of hosts 170. Customer infrastructure 102 may be implemented in a hybrid manner, e.g., with hosts 150 being on-premise and hosts 170 in a private cloud controlled by the organization.

Each of hosts 150 is constructed on a hardware platform 160 such as an x86 architecture platform. Hardware platform 160 includes components of a computing device, such as one or more central processing units (CPUs) 162, memory 164 such as random-access memory (RAM), storage 166 such as one or more local or directly attached magnetic drives or solid-state drives (SSDs), and one or more network interface controllers (NICs) 168. NIC(s) 168 enables hosts 150 to communicate with each other and with other devices over a network (not shown) such as a local area network (LAN). Each of hosts 170 is similarly constructed on a hardware platform 180. Hardware platform 180 similarly includes components of a computer device (not shown), and hosts 170 communicate with each other and with other devices over a network (not shown) such as a LAN.

Networks used for communication between devices of customer infrastructure 102, e.g., between hosts 150, VM management appliance 138, and AP appliance 130, may be distinguishable from a public network such as the Internet through which cloud platform 110 may communicate with the devices of customer infrastructure 102. The networks used within customer infrastructure 102 may be private networks, and may be partitioned from the public network through firewalls. Each of hardware platforms 160 and 180 supports software 152 and 172, respectively. Software 152 and 172 include hypervisors 156 and 176, which are virtualization software layers. Hypervisors 156 and 176 support VM execution spaces within which VMs 154 and 174 are concurrently instantiated and executed. For example, hypervisors 156 and 176 may be VMware ESX^{®} hypervisors, available from VMware, Inc.

According to some embodiments, VM management appliance 138 logically groups hosts 150 into a cluster to perform cluster-level tasks such as provisioning and managing VMs 154. VM management appliance 138 may also aggregate storage devices 166 to create a storage pool (not shown) shared by VMs 154 across hosts 150. Similarly, VM management appliance 148 may logically group hosts 170 into a cluster to perform cluster-level tasks such as provisioning and managing VMs 174. VM management appliance 148 may also aggregate storage devices of hardware platform 180 to create a storage pool (not shown) shared by VMs 174 across hosts 170.

VM management appliances 138 and 148 may issue role-based authentication tokens to agents of AP appliances 130 and 140, respectively. For example, each authentication token may allow an agent possessing the token to access a respective one of VM management appliances 138 and 148 to perform operations that are associated with the issued token. VM management appliance 138 may be, for example, one of VMs 154, and VM management appliance 148 may similarly be one of VMs 174. For example, VM management appliances 138 and 148 may each be a VMware vCenter Server^{®} appliance, available from VMware, Inc.

Public cloud 100 is operated by a cloud computing service provider from a plurality of hosts (not shown). CPU(s) of the hosts are configured to execute instructions such as executable instructions that perform one or more operations described herein, which may be stored in memory of the hosts. Cloud platform 110 includes a cloud user interface (UI) 112 and a plurality of cloud services. In some embodiments, the cloud services may include a message broker service 114, an inventory service 116, an orchestrator service 118, an activity service 120, a stats services 122, and a scheduler service 124. Cloud platform 110 may also include other cloud services (not shown) such as a cloud authentication service that issues access tokens for agents of AP appliances 130 and 140 to authenticate with cloud services of cloud platform 110. For example, each of the cloud services of may be a microservice implemented as one or more container images of cloud platform 110.

The organization controlling customer infrastructure 102 may access cloud platform 110 via cloud UI 112, e.g., to request customized precheck tasks for migrations. Message broker service 114 enables communication between other cloud services and AP appliances 130 and 140, as discussed further below. Inventory service 116 caches various state information about VMs 154 and 174, which may be used to generate precheck tasks. When cloud platform 110 requires state information about one of VMs 154 or 174, if that information is already cached, that information is acquired directly from inventory service 116 without a costly application programming interface (API) call to one of AP appliances 130 and 140. For example, the cached state information may include amounts of memory consumed by each of VMs 154 and 174, storage policies used by each of VMs 154 and 174, and identifiers of logical L2 networks that each of VMs 154 and 174 are connected to.

Each of a VM's storage policies is a set of data related to storage in a computer system, e.g., a set of rules and configurations that define how data is stored, managed, protected, and accessed within a storage system or infrastructure. As one example, a storage policy may identify a number of host failures that an object can tolerate, e.g., identifying a redundant array of independent disks (RAID) level for storing the objects with predetermined levels of redundancy. As another example, a storage policy may specify whether to encrypt storage objects. As another example, a storage policy may specify whether to compress or deduplicate storage objects. As another example, a storage policy may identify a number of stripes for segmenting storage objects.

Orchestrator service 118 generates steps for migrations, including for precheck tasks, and orchestrates the steps using activity service 120 and scheduler service 124. Orchestrator service 118 transmits steps to activity service 120, which monitors the performance of the steps. Activity service 120 transmits individual tasks to scheduler service 124 for execution and waits for scheduler service 124 to transmit the tasks to AP appliances 130 and 140 to be handled by agents thereon. The agents then transmit results to scheduler service 124, which transmits the results to activity service 120. If activity service 120 does not receive a response to a task, e.g., because one of hosts 150 or 170 is down, activity service 120 retransmits the task to scheduler service 124 and continues waiting for a response. Once results are received for all the tasks, activity service 120 transmits the results to orchestrator service 118 for analysis.

Stats service 122 collects performance metrics to enable optimizations for migrations and transmits collected metrics directly to orchestrator service 118. For example, during prechecks, stats service 122 may collect information indicating that a migration will consume thirty percent of computing resources of the source host. Based on such information, orchestrator service 118 adjusts the migration, e.g., by capping the migration's usage of computing resources, which slows down the migration of a target VM but avoids degrading the performance of other VMs.

AP appliance 130 includes agents such as a message broker agent 132, an orchestrator agent 134, and a stats agent 136. Message broker agent 132 communicates with message broker service 114 to establish communication between cloud platform 110 and AP appliance 130. Agents of AP appliance 130 provide messages to message broker agent 132, and cloud services of cloud platform 110 provide messages to message broker service 114. Message broker service 114 and message broker agent 132 periodically exchange messages. Message broker service 114 then distributes messages from AP appliance 130 to cloud services, and message broker agent 132 distributes messages from cloud platform 110 to agents.

Orchestrator agent 134 receives and executes requests from scheduler service 124, to perform steps of migrations, including for precheck tasks. For example, for a precheck task, orchestrator agent 134 may request VM management appliance 138 for an identifier of a logical L2 network on which one of VMs 154 executes. Upon receiving the identifier, orchestrator agent 134 transmits the identifier to scheduler service 124 to be transmitted to activity service 120. Furthermore, some of the precheck tasks are default precheck tasks completed before any migration while others are customized precheck tasks for a particular migration, e.g., created by an administrator.

In the case of performing a customized precheck task created by an administrator, orchestrator agent 134 verifies that the administrator who requested the task has requisite privileges for execution of the task. For example, the precheck task may involve requesting information from VM management appliance 138 that only certain administrators are allowed to access. AP appliance 130 may include a "discovery agent" (not shown) that keeps track of privileges for different administrators and that provides tokens to other agents to authenticate with VM management appliance 138 upon verifying such privileges. If the precheck task requires a greater privilege than the requesting administrator has, orchestrator agent 134 returns an error to scheduler service 124.

As orchestrator agent 134 performs precheck tasks, stats agent 136 collects performance metrics from VM management appliance 138 for transmitting to stats service 122. AP appliance 130 may also include other agents (not shown) such as an identity agent that acquires access tokens for agents of AP appliance 130 to authenticate with respective cloud services of cloud platform 110. For example, AP appliance 130 may be one of VMs 154 or may be one of hosts 150.

AP appliance 140 includes agents such as a message broker agent 142, an orchestrator agent 144, and a stats agent 146. Message broker agent 142 communicates with message broker service 114 to establish communication between cloud platform 110 and AP appliance 140. As with AP appliance 130, agents of AP appliance 140 and cloud services of cloud platform 110 periodically exchange messages via message broker service 114 and message broker agent 142.

Similar to orchestrator agent 134, orchestrator agent 144 receives and executes requests from scheduler service 124 to perform steps of migrations, including for precheck tasks. Such precheck tasks include default precheck tasks and include customized precheck tasks that may, if created by an administrator, require verification of administrator privileges by orchestrator agent 144 and a discovery agent (not shown) of AP appliance 140. As orchestrator agent 144 performs precheck tasks, stats agent 146 collects performance metrics from VM management appliance 148 for transmitting to stats service 122. AP appliance 140 may also include other agents (not shown) such as an identity agent that acquires access tokens for other agents of AP appliance 140 to authenticate with respective cloud services of cloud platform 110. For example, AP appliance 140 may be one of VMs 174 or may be one of hosts 170.

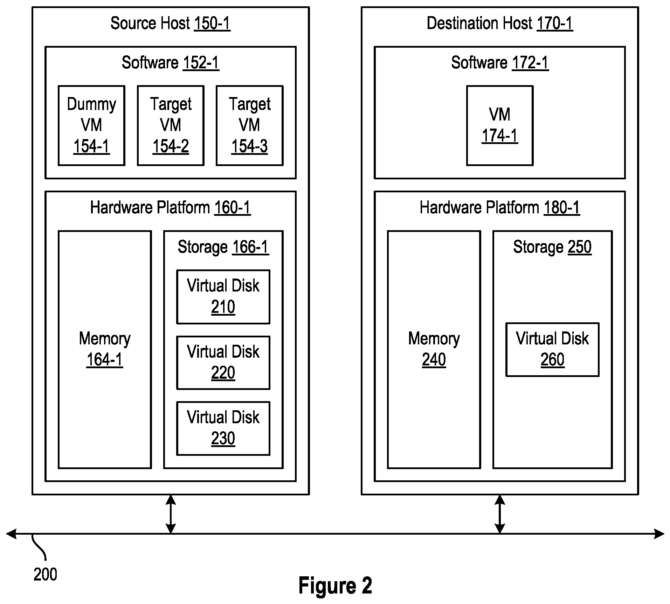

Figure 2 is a block diagram of an example of a source host 150-1 and a destination host 170-1 for a migration. Source host 150-1 is one of the cluster of hosts 150 of Figure 1, and destination host 170-1 is one of the cluster of hosts 170 of Figure 1. Source Host 150-1 and destination host 170-1 are constructed on hardware platforms 160-1 and 180-1, respectively. Hardware platforms 160-1 and 180-1 respectively include memory 164-1 and 240 such as RAM and include storage 166-1 and 250, which are each one or more local or directly attached magnetic drives or SSDs. Hardware platforms 160-1 and 180-1 support software 152-1 and 172-1.

Software 152-1 and 172-1 include VM execution spaces, the VM execution space of software 152-1 including an executing dummy VM 154-1 and executing target VMs 154-2 and 154-3, and the VM execution space of software 172-1 including an executing VM 174-1. Dummy VM 154-1, target VM 154-2, and target VM 154-3 are connected via a common network 200 such as a logical L2 network, which is provisioned on one or more Layer 3 (L3) networks (not shown). For example, network 200 may be a logical L2 network provisioned from a single L3 LAN. On the other hand, for example, if source host 150-1 and destination host 170-1 are in separate data centers, network 200 may be a single "stretched" logical L2 network provisioned across an L3 LAN of one data center and an L3 LAN of another data center. Additional logical L2 networks (not shown) may be provisioned from the one or more L3 networks, but only one is illustrated in Figure 2 for simplicity.

Dummy VM 154-1 and target VMs 154-2 and 154-3 execute using virtual disks 210, 220, and 230, respectively, the virtual disks being stored in storage 166-1. Virtual disk 210 may be relatively small (e.g., 5 GB) compared to virtual disks 220, 230, and 260 (e.g., 1 TB each). Virtual disk 210 is created to support execution of dummy VM 154-1, which is a VM that is instantiated and migrated to efficiently test migration of a VM with a plurality of matching configurations to those of target VMs 154-2 and 154-3. Virtual disks 220, 230, and 260 are created to support execution of target VMs 154-2 and 154-3 and VM 174-1, respectively, which are VMs that are instantiated to execute one or more applications for the organization.

For example, one matching network configuration of dummy VM 154-1 may be using a static IP address, or may be using a dynamically assigned IP address, e.g., assigned by a dynamic host configuration protocol (DHCP) server. Another example of a matching network configuration is a specified number of virtual network interface controllers (vNICs). Another example of a matching network configuration is a specified maximum transmission unit (MTU) for network transactions. Additional examples of matching network configurations include a common network mask and a common gateway.

In the example of Figure 2, target VMs 154-2 and 154-3 have been selected for migration from source host 150-1 to destination host 170-1. Such migration includes transmitting, from source host 150-1 to destination host 170-1, memory contents of target VMs 154-2 and 154-3 (data used by target VMs 154-2 and 154-3 stored in memory 164-1), and storing the memory contents in memory 240. Such migration further includes transmitting virtual disks 220 and 230 from source host 150-1 to destination host 170-1, and storing virtual disks 220 and 230 in the data store of the cluster of destination host 170-1. However, before initiating such migration, prechecks are performed.

As part of the precheck process, dummy VM 154-1 has been instantiated on source host 150-1. A migration of dummy VM 154-1, referred to herein as a "dummy migration," is performed to test a migration with the plurality of matching configurations. Such dummy migration includes transmitting, from source host 150-1 to destination host 170-1, memory contents of dummy VM 154-1 stored in memory 164-1, and storing the memory contents in memory 240. Such migration further includes transmitting virtual disk 210 from source host 150-1 to destination host 170-1, and storing virtual disk 210 in the data store of the cluster of destination host 170-1.

The dummy migration simulates, at least on a small scale, the later migrations of target VMs 154-2 and 154-3. Such simulation verifies that throughout the dummy migration, there is no interruption in the execution of dummy VM 154-1, including in connectivity over network 200 both at source host 150-1 and destination host 170-1. For example, if dummy VM 154-1 uses an IP address dynamically assigned by a DHCP server, the migration tests whether software 172-1 supports DHCP, e.g., whether destination 170-1 is able to communicate with a DHCP server. As another example, if dummy VM 154-1 uses a specified number of vNICs, the migration tests whether software 172-1 supports a VM using the specified number of vNICs and that no vNICs are lost. As another example, if dummy VM 154-1 has a specified MTU for network transactions, such migration tests whether software 172-1 supports the specified MTU so that data transmission is not limited by the migration.

Additionally, during such simulation, the performance of the dummy migration is analyzed. For example, during the dummy migration, a percentage of CPU resources of hardware platforms 160-1 and 180-1 may be measured for migration operations, including operations for reading virtual disk 210 from storage 166-1 and operations for writing virtual disk 210 to storage 250. To later increase or decrease the computing speed impact on other VMs when migrating target VMs 154-2 and 154-3, cloud platform 110 may increase or decrease the allowable consumption of such CPU resources by migration operations. For example, cloud platform 110 may adjust a maximum input/output operations per second (IOPS) of the CPU resources to limit, e.g., read operations performed on virtual disk 210 at storage 166-1 or write operations performed on virtual disk 210 at storage 250. As another example, for the dummy migration, an amount of time may be measured for transmitting storage objects from source host 150-1 to destination host 170-1. To increase or decrease the later communication speed impact on other VMs when migrating target VMs 154-2 and 154-3, cloud platform 110 may increase or decrease the allowable bandwidth consumption of migration operations across network 200. Accordingly, cloud platform 110 may use measurements from the dummy migration to adjust the migrations of target VMs 154-2 and 154-3 according to desired performances.

In addition to the dummy migration, as part of the precheck process, information relevant to the migration of target VMs 154-2 and 154-3, is collected. Based on such collected information, it may be determined, e.g., whether virtual disks 220 and 230 are capable of being stored at the destination cluster using storage policies applied to target VMs 154-2 and 154-3. For example, depending on a number of host failures that target VMs 154-2 and 154-3 are specified to tolerate, it may be determined whether the destination cluster includes enough hosts to store copies of virtual disks 220 and 230 and whether the hosts each includes enough free storage space thereon for such storage. Once the precheck process is determined to be successful, source host 150-1 migrates target VMs 154-2 and 154-3 to destination host 170-1 based on any adjustments made in response to measured performance metrics.

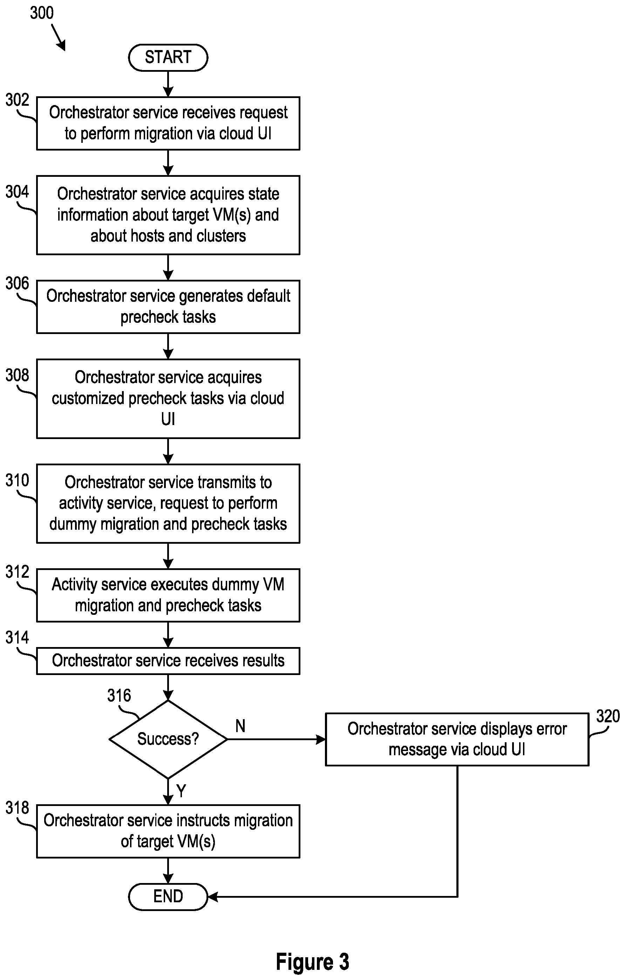

Figure 3 is a flow diagram of a method 300 performed by cloud platform 110 to perform prechecks for a migration of one or more target VMs and to migrate the target VM(s), according to some embodiments. The target VM(s) are executing on a source host of a source cluster and are to be migrated to a destination host of a destination cluster. At step 302, orchestrator service 118 receives a request to perform a migration of the target VM(s). The request may be received via cloud UI 112.

At step 304, orchestrator service 118 acquires state information about the target VM(s) such as logical L2 networks that the target VM(s) are connected to. The state information is to be used for generating precheck tasks. For state information already cached by inventory service 116, orchestrator service 118 acquires the information directly from inventory service 116. For other state information, orchestrator service 118 transmits a request to the AP appliances at the source and destination clusters. Orchestrator agents at the AP appliances acquire the state information from the VM management appliances managing the source and destination clusters and then transmit the information to orchestrator service 118.

At step 306, orchestrator service 118 generates default precheck tasks. For example, as just one of the default precheck tasks, based on an identifier of a logical L2 network over which the target VM(s) communicate, orchestrator service 118 may generate a precheck task to verify that the identified logical L2 network is up at both the source and destination hosts, i.e., that virtual switches (vSwitches) configured in the source and destination hosts are each connected to the identified logical L2 network. A vSwitch is a network switch implemented in software.

At step 308, orchestrator service 118 acquires customized precheck tasks for the particular migration, which may be specified, e.g., by the administrator via cloud UI 112. For example, as just one of the customized prechecks, cloud platform 110 may check for compliance at the destination host with a storage policy for compressing or deduplicating objects stored thereby such as virtual disks. As another example, as a customized precheck task, cloud platform 110 may check for compliance by the destination host with one or more security policies such as ensuring that an internal network of the destination host such as a management network used by administrators, is not publicly accessible, e.g., from the Internet.

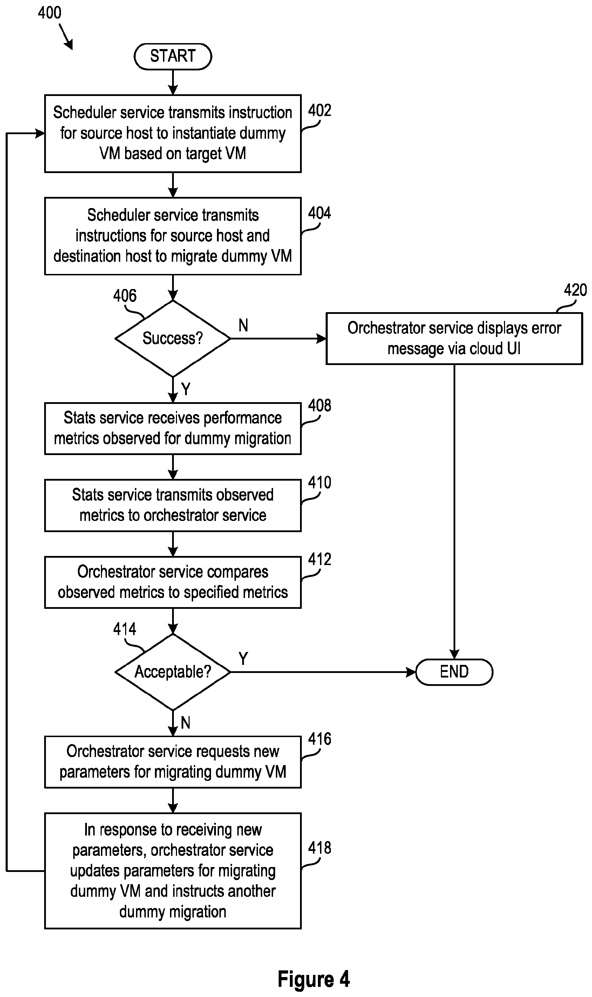

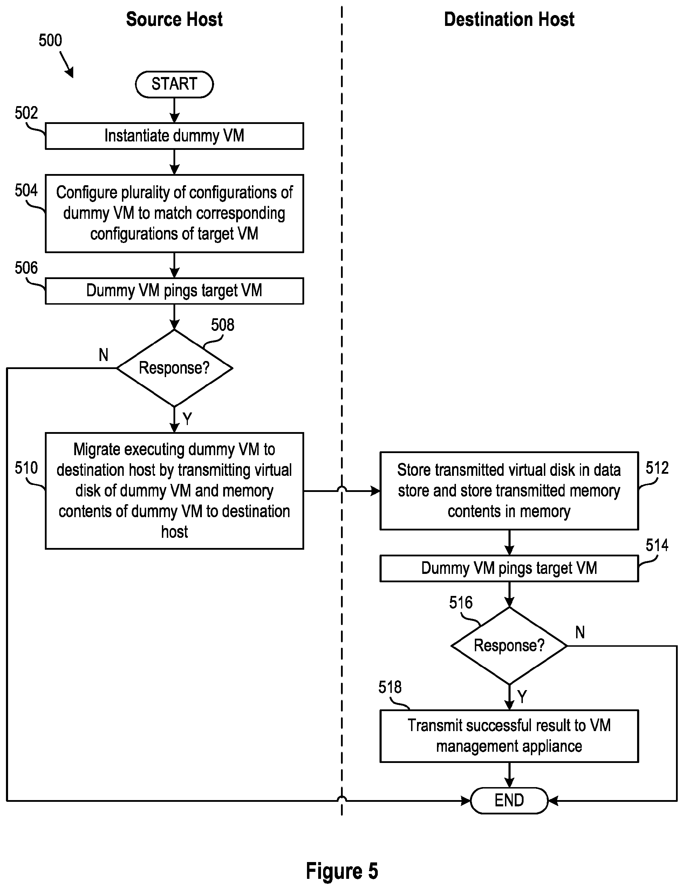

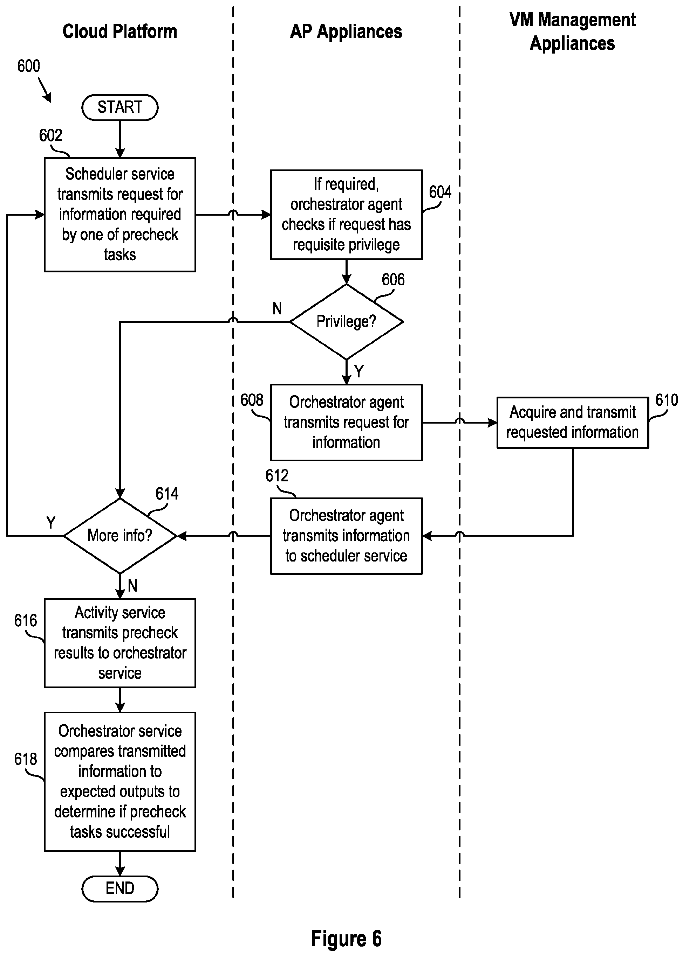

At step 310, orchestrator service 118 transmits to activity service 120, (1) a request to perform a dummy migration and (2) all the default and customized precheck tasks generated and acquired at steps 306 and 308. At step 312, activity service 120 executes a dummy migration from the source host to the destination host, as discussed further below in conjunction with Figures 4 and 5. Activity service 120 also executes the default and customized precheck tasks, as discussed further below in conjunction with Figure 6. At step 314, orchestrator service 118 receives results of the dummy migration and the default and customized precheck tasks.

At step 316, orchestrator service 118 determines whether the precheck was successful, i.e., if the precheck results from performing the dummy migration and precheck tasks indicate that the migration of the target VM(s) will not disrupt the execution of the target VM(s) and will satisfy any required performance metrics. If the precheck was successful, at step 318, orchestrator service 118 instructs the migration of the target VM(s). Upon receiving the instruction via activity service 120, scheduler service 124 transmits, to AP appliances at the source and destination clusters, instructions for the source host to migrate the target VM(s) to the destination host, and method 300 ends. Returning to step 316, if the precheck was unsuccessful, i.e., if the migration would disrupt the execution of the target VM(s) or would not satisfy a required performance metric, method 300 moves to step 320. At step 320, orchestrator service 118 displays an error message via cloud UI 112, and method 300 ends. In the case of a failure, an administrator may remediate configurations of the target VM(s) or remediate configurations or resources of the source and destination clusters, and the administrator may adjust performance parameters of the migration such as maximum IOPS to satisfy performance metrics. The administrator may then request the migration of the target VM(s) again, and steps 302-316 are repeated.

Figure 4 is a flow diagram of a method 400 that may be performed by cloud platform 110 to plan and orchestrate a dummy migration, according to some embodiments. At step 402, scheduler service 124 transmits an instruction for the source host to instantiate a dummy VM based on a target VM of a migration. Scheduler service 124 transmits the instruction to an AP appliance at the source cluster. The dummy VM is instantiated to include a plurality of configurations that match corresponding configurations of the target VM.

At step 404, scheduler service 124 transmits instructions for the source host to migrate the dummy VM to the destination host. Scheduler service 124 transmits the instructions to AP appliances at the source and destination clusters. At step 406, if the dummy VM is successfully migrated, method 400 moves to step 408, and stats service 122 receives performance metrics observed for the dummy migration. Such performance metrics may be measured by stats agents in the AP appliances at the source and destination clusters and transmitted to stats service 122.

At step 410, stats service 122 transmits the observed metrics to orchestrator service 118. At step 412, orchestrator service 118 compares the observed metrics to metrics specified for the dummy migration, e.g., specified by an administrator. For example, the observed metrics may include a percent of computing resources of the source host used for operations of the dummy migration, and the specified metrics may include a maximum percentage of computing resources desired for such operations.

At step 414, if the performance of the dummy migration was unacceptable based on the comparisons of step 412, method 400 moves to step 416. At step 416, orchestrator service 118 requests new configurations (parameters) for migrating a dummy VM. For example, orchestrator service 118 may display, to an administrator via cloud UI 112, an error message highlighting the comparisons of step 412 and requesting the new parameters. At step 418, in response to receiving new parameters, e.g., from the administrator via cloud UI 112, orchestrator service 118 updates the parameters for migrating the dummy VM to the received parameters. Orchestrator service 118 then transmits an updated instruction to activity service 120 for performing a dummy migration using the updated parameters. Activity service 120 transmits the updated instruction to scheduler service 124, method 400 returns to step 402, and steps 402 to 414 are repeated to perform another dummy migration with the updated parameters. For example, in the next dummy migration, the maximum IOPS may be capped to lower the amount of computing resources used by the source host and/or destination host for the dummy migration.

At step 414, once the performance of a dummy migration is acceptable, method 400 ends, and the dummy migration is successful. Later, when a target VM(s) are migrated, if step 418 was performed at least once to adjust parameters, instructions for the migration are issued with such adjustments to the parameters, which were made according to results of comparisons at step 412. Returning to step 406, if any dummy migration is unsuccessful, resulting in an interruption to the execution of a dummy VM, method 400 moves to step 420. At step 420, orchestrator service 118 displays an error message via cloud UI 112. After step 420, method 400 ends.

Figure 5 is a flow diagram of a method 500 performed by source and destination hosts to execute a dummy migration, according to some embodiments. At step 502, in response to a request from scheduler service 124, the source host instantiates and begins executing a dummy VM. At step 504, the source host configures a plurality of configurations of the instantiated dummy VM to match corresponding configurations of a target VM. At step 506, at the source host, the dummy VM pings the target VM by transmitting a message to the target VM, e.g., over a logical L2 network that both the dummy VM and target VM are connected to.

At step 508, if the dummy VM does not receive a response (e.g., within a predetermined timeout interval), method 500 ends, and the source host transmits an error to a VM management appliance at the source cluster to be transmitted to an AP appliance at the source cluster and then to cloud platform 110. Otherwise, if the dummy VM does receive a response, method 500 moves step 510. At step 510, the executing dummy VM is migrated from the source host to the destination host. Such migration includes the source host transmitting a virtual disk and memory contents of the dummy VM to the destination host.

At step 512, the destination host stores the transmitted virtual disk in the data store of the destination cluster and stores the transmitted memory contents in memory of the destination host. The dummy VM continues executing at the destination host. At step 514, the dummy VM pings the target VM by transmitting a message from the destination host to the source host over the same network, e.g., logical L2 network, used at step 506. At step 516, if the dummy VM does not receive a response (e.g., within a predetermined timeout interval), method 500 ends, and the destination host transmits an error to a VM management appliance at the destination cluster to be transmitted to an AP appliance at the destination cluster and then to cloud platform 110.

Otherwise, if the dummy VM does receive a response, method 500 moves to step 518, and the destination host transmits a successful result to the VM management appliance at the destination cluster to be transmitted to cloud platform 110 via the AP appliance at the destination cluster. Based on successful pings in steps 506 and 514, the dummy VM was connected, e.g., to the logical L2 network thereof, before and after migration. This verifies portability of the matching configurations of the dummy VM, i.e., the ability of a VM with such configurations to execute without interruption when being migrated from the source host to the destination host. After step 518, method 500 ends.

Figure 6 is a flow diagram of a method 600 performed by cloud platform 110 and AP appliances and VM management appliances at source and destination clusters, to perform precheck tasks by acquiring and analyzing information relevant to a migration, according to some embodiments. At step 602, scheduler service 124 transmits a request for information required by one of a plurality of precheck tasks. Scheduler service 124 transmits the request to one of the AP appliance at the source cluster and the AP appliance at the destination cluster, depending on the information needed. For example, if the needed information is a number of hosts in the destination cluster or an amount of storage space of one or more hosts in the destination cluster, scheduler service 124 transmits the request to the AP appliance at the destination cluster. Additionally, the precheck task may be either a default or customized precheck task.

At step 604, if a certain privilege is required for performing the precheck task, e.g., for a customized precheck task created by an administrator, an orchestrator agent at the AP appliance at which the request is received, determines whether the request is associated with the requisite privilege, e.g., if the requesting administrator has the requisite privilege. At step 606, if the request is not associated with the requite privilege, method 600 moves to step 614. Otherwise, if the request is associated with the requisite privilege, method 600 moves to step 608. It should be noted that if no privilege is required for performing the precheck task, e.g., for a default precheck task, steps 604 and 606 are skipped, and method 600 moves directly from step 602 to 608.

At step 608, the orchestrator agent transmits a request to one of a VM management appliance at the source cluster and a VM management appliance at the destination cluster. If the AP appliance is at the source cluster, the request is transmitted to the VM management appliance at the source cluster, and if at the destination cluster, the request is transmitted to the VM management appliance at the destination cluster. At step 610, the VM management appliance that receives the request acquires and transmits the requested information to the orchestrator agent at the requesting AP appliance. The VM management appliance may already have the requested information stored therein or may acquire the requested information by communicating with one or more connected hosts. At step 612, the orchestrator agent transmits the information to scheduler service 124 to be forwarded to activity service 120.

At step 614, if there is more information for cloud platform 110 to request for the precheck items, method 600 returns to step 602, and steps 602 to 612 are repeated to collect more information. Otherwise, if all the required information has at least been requested by cloud platform 110, method 600 moves to step 616. At step 616, activity service 120 transmits all the precheck results to orchestrator service 118. Such results include information received from orchestrator agents at iterations of step 612 and any errors involving a lack of privilege. At step 618, orchestrator service 118 compares the transmitted information to expected outputs of the precheck tasks to determine if the precheck tasks are successful. Orchestrator service 118 may also display the results via cloud UI 112, and an administrator may manually analyze the results to determine whether the precheck tasks were successful. After step 618, method 600 ends.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

One or more embodiments of the invention also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations. The embodiments described herein may also be practiced with computer system configurations including hand-held devices, microprocessor systems, microprocessor-based or programmable consumer electronics, minicomputers, mainframe computers, etc.

One or more embodiments of the present invention may be implemented as one or more computer programs or as one or more computer program modules embodied in computer-readable media. The term computer-readable medium refers to any data storage device that can store data that can thereafter be input into a computer system. Computer-readable media may be based on any existing or subsequently developed technology that embodies computer programs in a manner that enables a computer to read the programs. Examples of computer-readable media are magnetic drives, SSDs, network-attached storage (NAS) systems, read-only memory (ROM), RAM, compact disks (CDs), digital versatile disks (DVDs), magnetic tapes, and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest operating system (OS) that perform virtualization functions.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined component. Similarly, structures and functionalities presented as a single component may be implemented as separate components. These and other variations, additions, and improvements may fall within the scope of the appended claims.

## Claims

1. A method of migrating an executing virtual machine, VM, (154) from a source host computer (150-1) to a destination host computer (170-1), the method comprising:
issuing a first instruction to the source host computer (150-1) to instantiate a dummy VM (154-1) having a plurality of network configurations that match a corresponding plurality of network configurations of a target VM (154-2, 154-3), which is running on the source host computer (150-1) and has been targeted for migration;
issuing second instructions to the source (150-1) and destination host computers (170-1) to migrate the dummy VM (154-1) from the source host computer (150-1) to the destination host computer (170-1);
determining that the dummy (154-1) VM that has been migrated to the destination host computer (170-1) is able to communicate with the target VM (154-2, 154-3); and
in response to determining that the migrated dummy VM (154-1) is able to communicate with the target VM (154-2, 154-3), issuing third instructions to the source and destination host computers (170-1) to migrate the target VM (154-2, 154-3) from the source host computer (150-1) to the destination host computer (170-1).

2. The method of claim 1, further comprising:
in response to receiving performance metrics of migrating the dummy VM (154-1), comparing the received performance metrics to specified metrics, wherein the third instructions are issued with parameters for migrating the target VM (154-2, 154-3) that are adjusted according to a result of comparing the received performance metrics to the specified metrics.

3. The method of claim 2, wherein the parameters issued with the third instructions include a limit on read or write operations performed on a virtual disk of the target VM (154-2, 154-3) during migration of the target VM (154-2, 154-3).

4. The method of any of claims 1 to 3, further comprising:
before migration of the target VM (154-2, 154-3), performing a customized precheck task created based on a policy of a first cluster that includes the source host (150-1) or of a second cluster that includes the destination host (170-1).

5. The method of any of claims 1 to 4, further comprising:
before migration of the target VM (154-2, 154-3), confirming that a virtual switch configured in the destination host computer (170-1) is connected to a logical Layer 2, L2, network of the target VM (154-2, 154-3).

6. The method of any of claims 1 to 5, further comprising:
before migration of the target VM (154-2, 154-3), confirming that a cluster of host computers includes enough host computers to satisfy a specified storage policy for storing a virtual disk of the target VM (154-2, 154-3), or that one of the host computers of the cluster has enough free storage space to satisfy the specified storage policy, the destination host computer (170-1) being in the cluster.

7. The method of any of claims 1 to 6, wherein the corresponding plurality of network configurations of the target VM (154-2, 154-3) includes one of: (1) using either a static or dynamic internet protocol, IP, address, (2) a specified number of virtual network interface controllers, vNICs, to use, and (3) a maximum transmission unit, MTU, for network transactions.

8. The method of any of claims 1 to 7,
wherein migrating the dummy VM (154-1) from the source host computer (150-1) to the destination host computer (170-1) includes transmitting, from a first cluster of host computers to a second cluster of host computers, a first virtual disk of the dummy VM (154-1) and memory contents of the dummy VM (154-1), and then storing the transmitted first virtual disk in storage of the second cluster and storing the transmitted memory contents of the dummy VM (154-1) in memory of the destination host computer (170-1), the source host computer (150-1) being in the first cluster, and the destination host computer (170-1) being in the second cluster, and
wherein migrating the target VM (154-2, 154-3) from the source host computer (150-1) to the destination host computer (170-1) includes transmitting, from the first cluster to the second cluster, a second virtual disk of the target VM (154-2, 154-3) and memory contents of the target VM (154-2, 154-3), and then storing the transmitted second virtual disk in the storage of the second cluster and storing the transmitted memory contents of the target VM (154-2, 154-3) in the memory of the destination host computer (170-1).

9. A non-transitory computer-readable medium comprising instructions that are executable in a computer system, wherein the instructions when executed cause the computer system to carry out a method of migrating an executing virtual machine, VM, from a source host computer (150-1) to a destination host computer (170-1), and wherein the method comprises:
issuing a first instruction to the source host computer (150-1) to instantiate a dummy VM (154-1) having a plurality of network configurations that match a corresponding plurality of network configurations of a target VM (154-2, 154-3), which is running on the source host computer (150-1) and has been targeted for migration;
issuing second instructions to the source (150-1) and destination host computers (170-1) to migrate the dummy VM (154-1) from the source host computer (150-1) to the destination host computer (170-1);
determining that the dummy VM (154-1) that has been migrated to the destination host computer (170-1) is able to communicate with the target VM (154-2, 154-3); and
in response to determining that the migrated dummy VM (154-1) is able to communicate with the target VM (154-2, 154-3), issuing third instructions to the source (150-1) and destination host computers (170-1) to migrate the target VM (154-2, 154-3) from the source host computer (150-1) to the destination host computer (170-1).

10. The non-transitory computer-readable medium of claim 9, wherein the method further comprises:
in response to receiving performance metrics of migrating the dummy VM (154-1), comparing the received performance metrics to specified metrics, wherein the third instructions are issued with parameters for migrating the target VM (154-2, 154-3) that are adjusted according to a result of comparing the received performance metrics to the specified metrics.

11. The non-transitory computer-readable medium of claim 10, wherein the parameters issued with the third instructions include a limit on read or write operations performed on a virtual disk of the target VM (154-2, 154-3) during migration of the target VM (154-2, 154-3).

12. The non-transitory computer-readable medium of any of claims 9 to 11, comprising at least one of the following features:
(i) wherein the method further comprises:
before migration of the target VM (154-2, 154-3), confirming that a cluster of host computers includes enough host computers to satisfy a specified storage policy for storing a virtual disk of the target VM (154-2, 154-3), or that one of the host computers of the cluster has enough free storage space to satisfy the specified storage policy, the destination host computer (170-1) being in the cluster;
(ii) wherein the corresponding plurality of network configurations of the target VM (154-2, 154-3) includes one of: (1) using either a static or dynamic internet protocol, IP, address, (2) a specified number of virtual network interface controllers, vNICs, to use, and (3) a maximum transmission unit, MTU, for network transactions.

13. The non-transitory computer-readable medium of any of claims 9 to 12,
wherein migrating the dummy VM (154-1) from the source host computer (150-1) to the destination host computer (170-1) includes transmitting, from a first cluster of host computers to a second cluster of host computers, a first virtual disk of the dummy VM (154-1) and memory contents of the dummy VM (154-1), and then storing the transmitted first virtual disk in storage of the second cluster and storing the transmitted memory contents of the dummy VM (154-1) in memory of the destination host computer (170-1), the source host computer (150-1) being in the first cluster, and the destination host computer (170-1) being in the second cluster, and
wherein migrating the target VM (154-2, 154-3) from the source host computer (150-1) to the destination host computer (170-1) includes transmitting, from the first cluster to the second cluster, a second virtual disk of the target VM (154-2, 154-3) and memory contents of the target VM (154-2, 154-3), and then storing the transmitted second virtual disk in the storage of the second cluster and storing the transmitted memory contents of the target VM (154-2, 154-3) in the memory of the destination host computer (170-1).

14. A computer of a cloud platform, the computing including a processor and memory, wherein the computer is configured to use the processor to execute instructions from the memory to:
issue a first instruction to a source host computer (150-1) to instantiate a dummy VM (154-1) having a plurality of network configurations that match a corresponding plurality of network configurations of a target VM (154-2, 154-3), which is running on the source host computer (150-1) and has been targeted for migration;
issue second instructions to the source host computer (150-1) and a destination host computer (170-1) to migrate the dummy VM (154-1) from the source host computer (150-1) to the destination host computer (170-1);
determine that the dummy VM (154-1) that has been migrated to the destination host computer (170-1) is able to communicate with the target VM (154-2, 154-3); and
in response to determining that the migrated dummy VM (154-1) is able to communicate with the target VM (154-2, 154-3), issue third instructions to the source (150-1) and destination host computers (170-1) to migrate the target VM (154-2, 154-3) from the source host computer (150-1) to the destination host computer (170-1).

15. The computer of claim 14, comprising at least one of the following features: (i) further configured to:
in response to receiving performance metrics of migrating the dummy VM (154-1), compare the received performance metrics to specified metrics, wherein the third instructions are issued with parameters for migrating the target VM (154-2, 154-3) that are adjusted according to a result of comparing the received performance metrics to the specified metrics;
(ii) further configured to:
before migration of the target VM (154-2, 154-3), perform a default precheck task that is specified to be performed for a plurality of migrations including the migration of the target VM (154-2, 154-3);
(iii) further configured to:
before migration of the target VM (154-2, 154-3), perform a customized precheck task created based on a policy of a first cluster that includes the source host (150-1) or of a second cluster that includes the destination host (170-1);
(iv) further configured to:
before migration of the target VM (154-2, 154-3), confirm that a virtual switch configured in the destination host computer (170-1) is connected to a logical Layer 2, L2, network of the target VM (154-2, 154-3);
(v) further configured to:
before migration of the target VM (154-2, 154-3), confirm that a cluster of host computers includes enough host computers to satisfy a specified storage policy for storing a virtual disk of the target VM (154-2, 154-3), or that one of the host computers of the cluster has enough free storage space to satisfy the specified storage policy, the destination host computer (170-1) being in the cluster.
